# EUROPÄISCHE PATENTSCHRIFT

(11) **EP 3 432 023 B1**
(45) Veröffentlichungstag und Bekanntmachung des Hinweises auf die Patenterteilung: **14.08.2019**
(21) Anmeldenummer: 18180276.0
(22) Anmeldetag: 28.06.2018
(51) Int. Cl.: G01S 7/481, G01S 7/497

(54) **VERFAHREN ZUR HERSTELLUNG EINES OPTOELEKTRONISCHEN SENSORS**
METHOD FOR MANUFACTURING AN OPTOELECTRONIC SENSOR
PROCÉDÉ DE FABRICATION D'UN CAPTEUR OPTOÉLECTRONIQUE

(30) Priorität: 21.07.2017 DE 102017116492
(43) Veröffentlichungstag der Anmeldung: 23.01.2019
(73) Patentinhaber: Sick AG, 79183 Waldkirch (DE)
(72) Erfinder: Marra, Martin, 79280 Au (DE); Ostojic, Oliver, 79108 Freiburg (DE)

(56) Entgegenhaltungen:
- EP-A1- 3 182 153
- DE-A1- 3 924 684
- DE-A1- 10 254 888
- DE-A1-102014 102 420

## Beschreibung

Die Erfindung betrifft ein Verfahren zur Herstellung eines optoelektronischen Sensors nach dem Oberbegriff von Anspruch 1.

Die Wahl des Empfangselements und der optische Aufbau eines solchen Sensors haben erheblichen Einfluss auf dessen Leistungsfähigkeit. Um auch geringe Empfangsintensitäten nachweisen zu können, werden in manchen Fällen Lawinenphotodioden eingesetzt (APD, Avalanche Photo Diode). Das einfallende Licht löst hier einen kontrollierten Lawinendurchbruch (Avalanche Effect) aus. Dadurch werden die durch einfallende Photonen erzeugten Ladungsträger vervielfacht, und es entsteht ein Photostrom, der zu der Lichtempfangsintensität proportional, dabei aber wesentlich größer ist, als bei einer einfachen PIN-Diode.

Eine noch größere Empfindlichkeit wird mit Lawinenphotodioden erreicht, die im sogenannten Geiger-Modus betrieben werden (SPAD, Single Photon Avalanche Diode, auch SiPM, Silicon Photomultiplier). Hierbei wird die Lawinenphotodiode oberhalb der Durchbruchspannung vorgespannt, so dass bereits ein einziger, durch ein einzelnes Photon freigesetzter Ladungsträger eine nicht mehr kontrollierte Lawine auslösen kann, die dann aufgrund der hohen Feldstärke sämtliche verfügbaren Ladungsträger rekrutiert. Die Lawinenphotodiode zählt somit wie der namensgebende Geigerzähler Einzelereignisse. Lawinenphotodioden im Geigermodus sind nicht nur hochempfindlich, sondern auch vergleichsweise kostengünstig. Zudem lassen sie sich mit wenig Aufwand auf einer Leiterkarte integrieren.

Über die reine Objekterfassung hinaus wird in entfernungsmessenden Systemen auch eine Distanz zu dem Objekt bestimmt. Distanzsensoren nach dem Lichtlaufzeitprinzip messen dazu die Laufzeit eines Lichtsignals, die über die Lichtgeschwindigkeit der Entfernung entspricht. Man unterscheidet herkömmlich die pulsbasierte und die phasenbasierte Messung. In einem Pulslaufzeitverfahren wird ein kurzer Lichtpuls ausgesandt und die Zeit bis zum Empfang einer Remission oder Reflexion des Lichtpulses gemessen. Alternativ wird bei einem Phasenverfahren Sendelicht amplitudenmoduliert und eine Phasenverschiebung zwischen Sende- und Empfangslicht bestimmt, wobei die Phasenverschiebung ebenfalls ein Maß für die Lichtlaufzeit ist.

In den meisten Fällen und besonders bei der Entfernungsmessung muss der Sensor zwischen Nutzlicht, beispielsweise eines eigenen oder zugeordneten Lichtsenders, und Umgebungslicht oder Störungen von anderen Lichtquellen unterscheiden können. Je nach Anwendung, etwa in besonders hellen Umgebungen, bei schlecht remittierenden Zielobjekten oder großen Messentfernungen, kann dies bei äußerst geringem Nutzlichtpegel eine sehr anspruchsvolle Aufgabe sein.

Dabei ist wegen der vergleichsweise großen Detektorfläche von SPADs auch deren Fremdlichteintrag hoch. Die Fremdlichtmenge wiederum bestimmt hier entscheidend das Signal-Rausch-Verhältnis (SNR, signal-to-noise ratio). Es ist möglich, das Fremdlicht zu begrenzen, indem im Empfangspfad für eine Fokussierung des Empfangslichtbündels gesorgt und in der Position, wo der Querschnitt am kleinsten ist, eine Blende positioniert wird. Das ist beispielsweise das Vorgehen gemäß DE 10 2014 102 420 A1, wobei dort zusätzlich hinter der Blende zum Lichtempfänger hin noch ein optisches Trichterelement angeordnet ist, um das Empfangslicht auf den Lichtempfänger zu führen und zusätzlich zu homogenisieren.

Eine derartige Blende muss aber justiert und fixiert werden. Wegen Bauteiltoleranzen und begrenzter Justagequalität wird die Blendenöffnung in der Praxis größer gewählt, als dies insbesondere für ein möglichst gutes Signal-Rausch-Verhältnis optimal wäre. Signalverluste aufgrund von Empfangslichtanteilen, welche eine zu kleine oder gegenüber dem Empfangslichtbündel verschobene Blende nicht passieren können, würden einen überproportionalen Qualitätsverlust mit sich bringen. Die Blendenöffnung neben dem Empfangslichtbündel passierendes Fremdlicht führt zu zufälligen Detektionsereignissen, deren Einfluss als Schrotrauschen gemäß einer Wurzelfunktion beiträgt.

Sollen die Einbußen durch eine nicht optimale Blende begrenzt werden, so müssen toleranzarme Komponenten entwickelt und gefertigt und dann hoch präzise justiert und verzugsarm fixiert werden. Das erhöht die Herstellung durch Bauteilkosten sowie komplexe und langwierige Prozesse, die zudem wenig flexibel sind. Überdies muss im Produktionsprozess mit Gefahrengut wie Klebstoffen, Lötvorrichtungen und dergleichen umgegangen werden.

Es ist daher Aufgabe der Erfindung, einen optoelektronischen Sensor zu finden, bei dem die Robustheit im Empfangssystem erhöht ist.

Diese Aufgabe wird durch ein Verfahren zur Herstellung eines optoelektronischen Sensors nach Anspruch 1 gelöst. In der Empfangseinheit des Sensors wird eine Blende in einer Fokalebene der Empfangsoptik angeordnet. An dieser Blendenposition hat das Empfangslichtbündel den kleinsten Querschnitt. Je nach Ausführungsform wird die Fokalebene aufgrund von Toleranzen nicht genau getroffen, das wird immer noch als Anordnung in der Fokalebene bezeichnet. Durch die Blende kann zumindest der Fremdlichtanteil unterdrückt werden, welcher die Empfangsoptik auf dem Nahfeld oder mittleren Entfernungen erreicht. Die Blendenöffnung befindet sich innerhalb der Fokalebene dort, wo das Empfangslichtbündel die Blende passiert, so dass möglichst keine Nutzsignalanteile in der Blende verloren gehen. Der Lichtempfänger wird vorzugsweise erst zuletzt in die übrige Empfangseinheit aus Empfangsoptik mit fertiger individueller Blende montiert.

Die Erfindung geht von dem Grundgedanken aus, dass die Blende individuell hergestellt wird. Diese Herstellung erfolgt unter Verwendung der Empfangsoptik, sei es weil die Empfangsoptik direkt an der Herstellung beteiligt ist oder weil ihre Eigenschaften die Herstellung der Blende bestimmen. Dabei bedeutet Herstellen einer Blende nur vorzugsweise die vollständige Herstellung aus Rohmaterialien. Als Herstellen wird auch aufgefasst, wenn in einem Rohling erst noch die funktionale Blendenöffnung angebracht wird.

Die Blende passt damit optimal zu der Empfangsoptik und dem von der Empfangsoptik erzeugten Empfangslichtbündel. Die individuelle Herstellung der Blende ersetzt die Justierung oder ergänzt sie zumindest. Die individuelle Blende ist spezifisch für gerade die Empfangsoptik hergestellt, mit der gemeinsam sie in dem Sensor eingesetzt wird. Herkömmlich würde dagegen eine Blende als Bauteil für mindestens eine ganze Charge von Sensoren bezogen, und der Sensor muss entweder die Konsequenzen von Toleranzen in Kauf nehmen, oder dies wird durch eine aufwändige Justage ausgeglichen.

Die Erfindung hat den Vorteil, dass Toleranzen der optisch wirksamen Komponenten im Empfangspfad minimiert werden. Durch die individuelle Blende kann auf Qualitätsschwankungen der Empfangsoptik reagiert werden. Dadurch wird eine möglichst kleine Blendenöffnung möglich, mit der im Idealfall keinerlei Fremdlicht außerhalb des Empfangslichtbündels eingesammelt wird, ohne jedoch dadurch Nutzlicht zu verlieren. Das ergibt ein optimales Sinal-Rausch-Verhältnis und damit eine höhere Messleistungsfähigkeit in einem justagefreien Herstellverfahren. Da mit Toleranzen der Bauteile umgegangen werden kann, reduzieren sich Werkzeug- und Teilekosten. Außerdem wird Gefahrgut in der Produktion für besondere Fixierungsprozesse vermieden.

Das Empfangslichtbündel wird vorzugsweise in der Montageposition der Empfangsoptik vermessen, um eine Eigenschaft der herzustellenden individuellen Blende zu gewinnen. Relevante Eigenschaften können beispielsweise der Strahlquerschnitt an bestimmten Z-Positionen oder dessen Lage im Raum sein. Dabei wird ohne Beschränkung der Allgemeinheit die Richtung der optischen Achse der Empfangseinheit als Z-Richtung bezeichnet.

Vorzugsweise wird als Eigenschaft die laterale Position des Empfangslichtbündels vermessen, wobei als individuelle Blende eine Blende mit einer Blendenöffnung an dieser Position hergestellt wird. Die laterale Position ist die Position auf einer Ebene senkrecht zur Z-Richtung. Über diese Eigenschaft wird sichergestellt, dass das Empfangslichtbündel im späteren Betrieb möglichst genau die Blendenöffnung trifft und folglich möglichst vollständig die individuelle Blende passiert. Die sonst übliche Justierung der Blende ist dadurch ersetzt oder zumindest ergänzt, dass durch individuelle Fertigung die Blendenöffnung an der richtigen Stelle angebracht ist.

Vorzugsweise wird als Eigenschaft die Lage der Fokalebene vermessen, wobei die Blende in dieser Lage positioniert wird. Dazu wird vorzugsweise die Spotgröße bestimmt, also der Strahlquerschnitt des Empfangslichtbündels in zumindest einer Z-Position. Um die Fokalebene zu finden, kann der kleinste Strahlquerschnitt in mehreren Z-Positionen gesucht beziehungsweise interpoliert werden. Das ist aber auch in einem Schritt denkbar, indem die Spotgröße in einer Z-Position bestimmt wird, die sich deutlich vor oder hinter der erwarteten Fokuslage befindet. Aus der dort gemessenen Spotgröße und der erwarteten Spotgröße im Fokus kann dann mittels Strahlensatz der noch notwendige Z-Versatz ermittelt werden.

Eine weitere denkbare Eigenschaft ist die Geometrie des Strahlquerschnitts, denn Form und Abmessungen der Blendenöffnung könnten auf die Geometrie des Empfangslichtbündels bei der kleinsten Einschnürung in der Fokalebene abgestimmt werden. Praktisch ändert sich dies aber aufgrund von Toleranzen nur wenig, so dass Form und Abmessungen der Blendenöffnung theoretisch und für alle Sensoren gleich aus dem Optikdesign festgelegt werden können.

Das Empfangslichtbündel wird vorzugsweise mit einer Kamera vermessen. Damit können die erforderlichen Eigenschaften relativ leicht erfasst und zuverlässig bestimmt werden. Da nur eine Kamera benötigt wird, um nacheinander eine Vielzahl von Sensoren herzustellen, spielen die Kosten sogar für eine hochwertige Kamera und Bildauswertung eine nur untergeordnete Rolle.

Zum Vermessen wird bevorzugt eine Projektionsfläche, insbesondere eine Mattscheibe, an einer möglichen Position der individuellen Blende angeordnet. Dadurch wird ein Empfangslichtfleck in einer Ebene erzeugt, der dann beispielsweise mit einer Kamera erfasst wird. Die mögliche Position der individuellen Blende kann ungefähr einer ohne Toleranzen erwarteten Fokalebene entsprechen, aber auch gezielt in Abstand dazu gewählt werden. Es geht hier nicht darum, die tatsächliche spätere Blendenposition zu treffen, sondern lediglich eine Position, in der sich die erforderlichen Eigenschaften ableiten lassen. Es ist auch denkbar, die Projektionsfläche in Z-Richtung zu bewegen, um mehr oder bessere Informationen zu gewinnen.

Die individuelle Blende wird bevorzugt in einer Fertigungslinie des Sensors hergestellt. Damit wird die Herstellung der individuellen Blende ein integraler Schritt innerhalb der üblichen Fertigung. Es müssen keine Teile bezogen werden, und es ist kein besonderer Prozessaufwand für die Beschaffung und Zuführung der individuellen Blenden erforderlich.

Die individuelle Blende wird vorzugsweise mittels 3D-Druck hergestellt. Damit sollen generative beziehungsweise additive Verfahren unabhängig von der konkreten Ausführung des 3D-Drucks bezeichnet sein. Durch 3D-Druck wird nicht nur die Blende an sich individuell, also insbesondere hinsichtlich Position, Form und Größe der Blendenöffnung. Es ist insbesondere auch möglich, die Blende direkt an der richtigen, vorzugsweise zuvor durch Vermessen des Empfangslichtbündels erfassten Z-Position der Fokalebene herzustellen. Damit ist die individuelle Blende unmittelbar qua Herstellung zumindest in lateraler Richtung, vorzugsweise auch in Z-Richtung richtig justiert. Diese Herstellung ist nicht nur flexibel, sondern auch noch kostengünstig.

Alternativ zu einem additiven Verfahren kommen auch subtraktive Verfahren aus einem Rohling in Betracht, in dem die gewünschte Blendenöffnung individuell angebracht wird, beispielsweise durch Laserschneiden, Stanzen, Bohren, Fräsen, Erodieren, Lithographie oder Ätzen.

Vorzugsweise wird zunächst ein Blendenrohling ohne Blendenöffnung in der Fokalebene der Empfangsoptik angeordnet und dann die Blendenöffnung erzeugt. Die Blendenöffnung wird gezielt an der Stelle erzeugt, an welcher das Empfangslichtbündel hindurchtreten soll. Das kann insbesondere dadurch ausgemessen werden, dass die Blende selbst als Projektionsfläche oder Mattscheibe dient.

Bevorzugt wird die Blendenöffnung mit einem Materialbearbeitungslaser hergestellt, dessen Strahlengang durch die Empfangsoptik geführt wird. Dazu wird vorzugsweise gar nicht vorab vermessen, wie die individuelle Blende aussehen sollte. Da der Materialbearbeitungslaser selbst die Empfangsoptik passiert, entspricht sein Strahlengang dem Empfangslichtbündel. Dazu sollte vorzugsweise der Materialbearbeitungslaser vergleichbare Strahleigenschaften haben, also beispielsweise entsprechend Licht aus dem Unendlichen kollimiert sein. Eine künstliche Defokussierung oder ein zusätzliches optisches Element für den Materialbearbeitungslaser ist denkbar, um Abweichungen des Strahlengangs etwa durch abweichende Wellenlängen zwischen Materialbearbeitungslaser und späterem Nutzlicht auszugleichen.

Empfangsoptik und individuelle Blende werden vorzugsweise in einem Optikträger montiert. Der Optikträger weist vorzugsweise einen Tubus zwischen Empfangsoptik und Blende auf, um das Empfangslicht zu führen und weiteres Fremdlicht abzuschirmen. Die Empfangsoptik ist vorteilhafterweise bereits in dem Optikträger montiert, wenn Eigenschaften des Empfangslichtbündels vermessen werden beziehungsweise die individuelle Blende daran angepasst hergestellt wird. Damit können insoweit später keine Toleranzen mehr entstehen.

Der Lichtempfänger weist vorzugsweise mindestens ein Lawinenphotodiodenelement auf, das mit einer Vorspannung oberhalb einer Durchbruchspannung vorgespannt und somit in einem Geiger-Modus betrieben ist. Ein derartiger SPAD-Empfänger ist besonders empfindlich. Die Signalbandbreite wird dabei nicht limitiert. Durch die interne Verstärkung in der Photozelle ist ihr thermisches Rauschen nahezu vernachlässigbar. Damit ist ein solcher Lichtempfänger für ein Optikdesign mit einer Blende ganz besonders gut geeignet. Die große Detektionsfläche bietet Spielraum für einen lateralen Versatz des Empfangslichtbündels, an den die individuelle Blende sich nur anpasst, ohne ihn auszugleichen. Vorzugsweise ist eine Vielzahl von Lawinenphotodioden vorgesehen. Das bietet eine noch größere Detektionsfläche und ermöglicht außerdem eine statistische Auswertung.

Vorzugsweise wird ein Lichtsender in koaxialer oder biaxialer Anordnung zu dem Lichtempfänger angeordnet, dessen Sendelichtstrahl das Empfangslichtbündel erzeugt. Dabei handelt es sich beispielsweise um einen Laser, dem bevorzugt eine Sendeoptik zugeordnet ist. Das Empfangslichtbündel, an das die individuelle Blende angepasst wird, ist vorzugsweise mit dem Lichtsender erzeugt. Dazu wird beispielsweise ein Reflektor in einer definierten Entfernung angeordnet, der den Sendelichtstrahl zur Empfangsoptik zurückführt. Damit stimmt die Justierung durch Herstellung der individuellen Blende nicht nur im Empfangspfad, sondern auch zwischen Sende- und Empfangspfad. Die Erfindung legt nicht fest, in welchem Schritt und zu welchem Zeitpunkt in der Fertigung der Lichtsender montiert wird. Allerdings befinden sich Lichtsender samt Sendeoptik und Empfangsoptik vorzugsweise in ihrer endgültigen Position, bevor die individuelle Blende hergestellt wird beziehungsweise die dafür erforderlichen Eigenschaften des Empfangslichtbündelt vermessen werden.

Alternativ zu einem eigenen Lichtsender wird das Empfangslichtbündel durch externes Licht erzeugt, wobei dafür vorzugsweise ein Lichtsender mit hinsichtlich Wellenlänge, Entfernung, Winkel und Strahlquerschnitt mit dem Betrieb vergleichbaren Eigenschaften eingesetzt wird. So entsteht eine Empfangseinheit, die für einen passiven Sensor ohne eigenen Lichtsender genutzt oder danach mit einem Lichtsender kombiniert wird.

Die Empfangsoptik und eine Sendeoptik des Lichtsenders werden bevorzugt in einem gemeinsamen Optikträger angeordnet. Damit ist von Anfang an die Justierung zwischen Sende- und Empfangseinheit baulich recht genau vorgegeben und ändert sich nach Fixierung nicht mehr. Verbleibende Toleranzen werden durch die sich anschließende Herstellung der individuellen Blende ausgeglichen.

Der Sensor ist bevorzugt ein entfernungsmessender Sensor, in dem eine Lichtlaufzeitmesseinheit zum Bestimmen einer Lichtlaufzeit an den Lichtempfänger angeschlossen wird. Dafür kommen alle bekannten Lichtlaufzeitverfahren in Betracht, also Pulslaufzeitverfahren, Phasenverfahren oder auch Pulsmittelungsverfahren. In vorteilhafter Weiterbildung zu einem Laserscanner wird die Entfernung nicht nur in einer Richtung gemessen, sondern eine bewegliche Ablenkeinheit ergänzt, wie ein Drehspiegel, oder die Empfangseinheit in einem beweglichen Messkopf montiert.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische Schnittdarstellung eines optoelektronischen Sensors;
- Fig. 2: ein beispielhaftes vereinfachtes Ersatzschaltbild einer in dem Lichtempfänger des Sensors gemäß Figur 1 einsetzbaren Lawinenphotodiode im Geiger-Modus;
- Fig. 3: eine Darstellung des Strahlverlaufs in einer Empfangseinheit mit Blende;
- Fig. 4: eine Darstellung zur Erläuterung des Vermessens eines Empfangslichtbündels in einer Empfangseinheit mittels Kamera;
- Fig. 5: eine schematische Draufsicht auf verschiedene individuelle Blenden entsprechend dem Empfangslichsbündel;
- Fig. 6: eine Schnittdarstellung eines Sende-Empfangsmoduls mit individueller Blende in der Empfangseinheit; und
- Fig. 7a-b: eine Darstellung des Strahlverlaufs des Empfangslichtbündels und des Lichtbündels eines Materialbearbeitungslasers vor und nach Erzeugung einer Blendenöffnung für eine individuellen Blende.

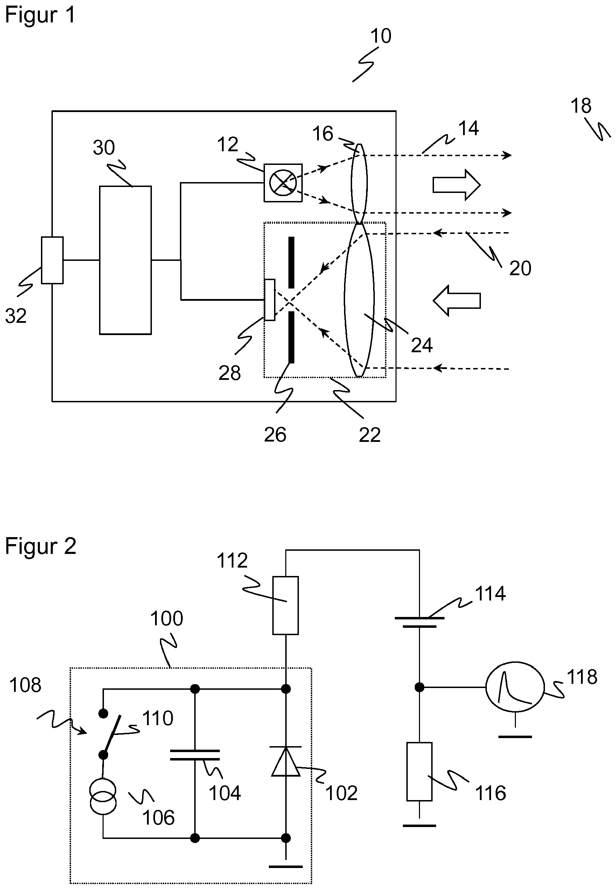

Figur 1 zeigt eine Blockdarstellung eines optoelektronischen Sensors 10, der beispielhaft als Lichttaster ausgebildet ist. Der Sensor 10 weist einen Lichtsender 12 auf, beispielsweise eine Laserdiode, deren Sendelicht 14 in einer Sendeoptik 16 kollimiert und dann in einen Überwachungsbereich 18 ausgesandt wird. Das an Objekten in dem Überwachungsbereich 18 remittierte Licht wird als Empfangslicht 20 in einer Empfangseinheit 22 mit einer Empfangsoptik 24 und eine Blende 26 auf einen Lichtempfänger 28 geleitet.

Der Lichtempfänger 28 kann als einfache Empfangsfläche etwa einer Photodiode ausgebildet sein. Vorzugsweise sind eine Vielzahl von Lichtempfangselementen oder Pixeln vorgesehen. Das Lichtempfangselement oder die Lichtempfangselemente des Lichtempfängers 28 sind vorzugsweise Lawinenphotodioden, die zur hochempfindlichen Erfassung von Empfangslicht 20 im Geiger-Modus betrieben werden. Zu deren Erläuterung zeigt Figur 2 ein beispielhaftes vereinfachtes Ersatzschaltbild einer derartigen Lawinenphotodiode. In der Praxis handelt es sich um ein Halbleiterbauteil, dessen nicht dargestellter Aufbau hier als bekannt vorausgesetzt wird. Die Lawinenphotodiode 100 zeigt zum einen das Verhalten einer Diode 102. Sie hat eine Kapazität, die durch einen parallel geschalteten Kondensator 104 repräsentiert wird. Der mögliche Lawinendurchbruch erzeugt Ladungsträger, deren Ursprung in dem Ersatzschaltbild als Stromquelle 106 dargestellt wird. Der Lawinendurchbruch wird durch ein auftreffendes Photon 108 ausgelöst, wobei dieser Vorgang wie ein Schalter 110 wirkt. Nach außen ist die Lawinenphotodiode über einen Widerstand 112 mit einer Stromquelle 114 verbunden. Zwischen dieser Stromquelle und einem weiteren Widerstand 116 kann an einem Punkt 118 das Ausgangssignal betrachtet werden.

Im Bereitschaftszustand liegt über der Diode 102 eine Spannung oberhalb der Durchbruchspannung an. Erzeugt dann ein einfallendes Photon 108 ein Ladungsträgerpaar, so schließt dies gleichsam den Schalter 110, so dass die Lawinenphotodiode über die Stromquelle 106 mit Ladungsträgern geflutet wird. Neue Ladungsträger entstehen aber nur, solange das elektrische Feld stark genug bleibt. Wird durch die Stromquelle 106 der Kondensator 104 so weit entladen, dass die Durchbruchspannung unterschritten ist, so kommt die Lawine von selbst zum Erliegen ("passive quenching"). Danach wird der Kondensator 104 von der äußeren Stromquelle 114 über den Widerstand 112 wieder aufgeladen, bis wieder eine Spannung über der Durchbruchspannung an der Diode 102 anliegt. Es gibt alternative Ausgestaltungen, in denen die Lawine von außen erkannt und daraufhin eine Entladung unter die Durchbruchspannung ausgelöst wird ("active quenching").

In dem Sensor 10 gemäß Figur 1 ist weiterhin eine Steuer- und Auswertungseinheit 30 vorgesehen, die mit dem Lichtsender 12 und dem Lichtempfänger 28 verbunden ist. Die Steuer- und Auswertungseinheit 30 erfasst anhand des Empfangssignals des Lichtempfängers 28 Objekte in dem Überwachungsbereich 18. Dabei wird in einer Ausführungsform des Sensors 10 als entfernungsmessender Lichttaster durch Aussenden von Lichtpulsen und Bestimmen der Lichtlaufzeit bis zu deren Empfang auch der Abstand der erfassten Objekte gemessen. Über einen Ausgang 32 kann die Auswertungseinheit 30 verarbeitete oder rohe Sensormessdaten ausgeben, beziehungsweise umgekehrt Steuer- und Parametrieranweisungen entgegennehmen.

Die anhand der Figur 1 beschriebene Ausführungsform des Sensors 10 ist nur beispielhaft zu verstehen. Es kann eine große Familie von optoelektronischen Sensoren erfindungsgemäß hergestellt werden, beispielsweise Lichtschranken oder Lichtgitter, Entfernungstaster oder Laserscanner. Diese Sensoren 10 können in ihrem Aufbau erheblich von Figur 1 abweichen, beispielsweise Sende- und Empfangskanal über einen gemeinsamen Teilerspiegel führen oder passiv arbeiten und damit gänzlich auf einen Sendekanal verzichten. Die Erfindung betrifft in erster Linie die Empfangseinheit 22 und hier speziell die Herstellung und Justierung der Blende 26, die im Folgenden weiter erläutert wird, und weniger den sonstigen Aufbau des Sensors 10.

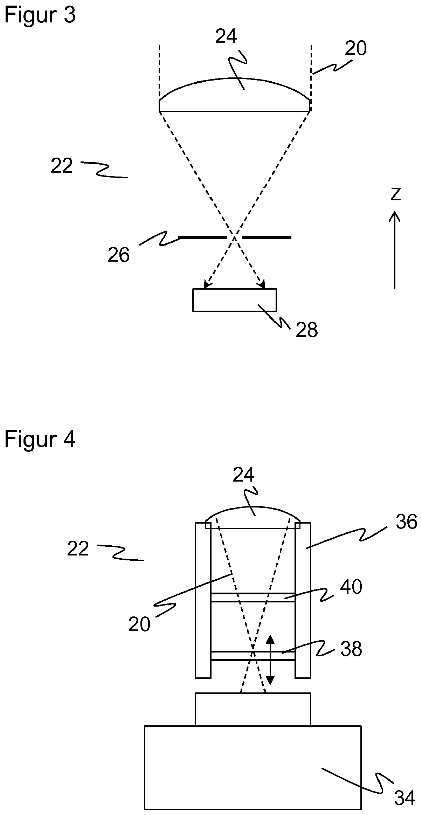

Figur 3 ist eine schematische Darstellung des Strahlverlaufs in der Empfangseinheit 22. Die Blende 26 wird in Richtung der optischen Achse der Empfangseinheit 22, die als Z-Richtung bezeichnet wird, in einem Abstand zu der Empfangsoptik 24 angeordnet, so dass das Empfangslicht 20 gerade im Fokus oder dem Punkt kleinster Einschnürung durch die Blendenöffnung tritt. Die Blende 26 liegt also in der Fokalebene der Empfangsoptik 24. Diese Bedingung gilt vorzugsweise für Empfangslicht 20 aus dem Unendlichen. Fremdlicht seitlich des von dem Empfangslicht 20 gebildeten Strahlenbündels wird durch die Blende 26 von dem Lichtempfänger 28 abgeschirmt.

Für ein optimales Signal-Rausch-Verhältnis dieser Empfangseinheit 22 sollte die Blendenöffnung der Blende 26 nur gerade so groß sein wie der Querschnitt des Empfangslichts 20 am Punkt kleinster Einschnürung, zugleich aber exakt lateral und nach Möglichkeit auch in Z-Richtung positioniert, damit kein Nutzlicht verloren geht. Aufgrund von Toleranzen der Empfangsoptik 24 und einer vorgefertigten Blende 26 erfordert das eine sehr exakte Justierung und Fixierung.

Erfindungsgemäß wird stattdessen eine individuelle Blende 26 hergestellt, deren Blendenöffnung individuell an den Strahlenverlauf des Empfangslichts 20 gerade der in diesem Sensor 10 verwendeten Empfangsoptik 24 angepasst ist. Die individuelle Blende 26 muss dann nur noch in Z-Richtung positioniert werden, wobei in einer bevorzugten Ausführungsform die Herstellung sogar direkt an dieser richtigen Z-Position erfolgt. Dabei können unterschiedliche Materialien und Fertigungsverfahren zum Einsatz kommen.

Durch die individuell gefertigte Blende 26 gibt es eine Toleranzentkopplung der optomechanischen Komponenten zur Elektronik, also der Empfangsoptik 24 und der Blende 26 zu dem Lichtempfänger 28. Da die Blende 26 genau auf die Toleranzen der Empfangsoptik 24 eingeht, verbleiben allenfalls ein lateraler Versatz und eine Änderung der Spotgröße des von dem Empfangslicht 20 auf dem Lichtempfänger 28 erzeugten Empfangslichtflecks. Das spielt aber keine Rolle, solange der Lichtempfänger 28 eine hinreichend große Fläche aufweist, wie dies insbesondere bei einem SPAD-Lichtempfänger oder einer SPAD-Matrix der Fall ist. Es gibt somit keine Signalverluste durch eine toleranzbehaftete Positionierung mehr.

Figur 3 zeigt als Empfangsoptik 24 beispielhaft eine einfache Sammellinse. Die Empfangsoptik 24 kann abweichend auch mehrteilig sein, insbesondere mehrere Linsen aufweisen, oder als Fresnellinse, ein reflexives Element, beispielsweise einen Hohlspiegel, oder ein diffraktives Element aufweisen. Außerdem ist vorzugsweise zwischen Empfangsoptik 24 und Blende 26 ein lichtabschirmender und -leitender Tubus vorgesehen, ähnlich kann zwischen Blende 26 und Lichtempfänger 28 ein Homogenisierer oder Blendentrichter wie in DE 10 2014 102 420 A1 oder ein anderes optisches Element angeordnet sein.

Figur 4 illustriert einen ersten Schritt einer Ausführungsform zur Herstellung einer individuellen Blende 26. Dabei wird das Strahlenbündel des Empfangslichts 20 in der Empfangseinheit 22 mit Hilfe einer Kamera 34 vermessen. Die Empfangsoptik 24 ist zu diesem Zeitpunkt bereits fertig aufgebaut, in diesem Beispiel in einem Optikträger 36 fixiert.

Ungefähr dort, wo später die Blende 26 positioniert sein soll, wird eine Mattscheibe 38 in den Optikträger 36 eingesetzt. Die genaue Lage der Fokusebene der konkret verbauten Empfangsoptik 24 ist noch nicht bekannt. Es kommt auch nicht darauf an, die Mattscheibe 38 gerade in der Fokusebene anzuordnen, vielmehr kann es je nach Vorgehen vorteilhaft sein, davon abzuweichen. Oberhalb der Mattscheibe 38 ist noch ein optionaler Fremdlichtfilter 40 dargestellt, beispielsweise ein Bandpassfilter, der auf die Wellenlänge des Lichtsenders 12 abgestimmt ist und für das Vermessen oder auch im fertigen Sensor 10 eingesetzt werden kann.

Die Kamera 34 nimmt nun ein Bild der Mattscheibe 38 auf und misst die Position und Geometrie, insbesondere Größe des Strahlquerschnitts des Empfangslichts 20 in Z-Höhe der Mattscheibe 38. Je nach Ausführungsform wird nun die Z-Position der Mattscheibe 38 variiert, bis der kleinste Strahlquerschnitt aufgefunden wurde, oder diese Z-Position wird aus mehreren Messungen interpoliert. Aufgrund des allgemeinen Optikdesigns der Empfangsoptik 24 kann bereits bekannt sein, wie der Strahlquerschnitt in der Fokusebene auszusehen hat. Dann ist es auch möglich, aus nur einer Z-Position mit Hilfe des Strahlensatzes auf die Z-Position der Fokusebene der verbauten Empfangsoptik 24 zu schließen. Entsprechend wird auch die laterale Position vermessen, d. h. in der Ebene senkrecht zur Z-Richtung, und gegebenenfalls bei noch von der Fokusebene abweichender Z-Position der Mattscheibe 38 mittels Strahlensatz angepasst.

Damit ist bekannt, an welcher Z-Position die individuelle Blende 26 anzuordnen ist und wo die Blendenöffnung in lateraler Richtung optimal angebracht werden sollte. Es ist auch denkbar, für die Blende 26 eine fixe Z-Position oder eine Auswahl fixer Z-Positionen im Optikträger 36 vorzusehen. Die Blende 26 liegt dann je nach Toleranzen der verbauten Empfangsoptik 24 nicht genau in der Fokalebene. Aufgrund des Vermessens durch die Kamera 34 ist es aber möglich, die Blendenöffnung zumindest lateral für diese Z-Lage optimal zu positionieren. Dabei kann die Blendenöffnung auch ein klein wenig größer ausgeführt werden als in optimaler Z-Lage, denn es ist für das Signal-Rausch-Verhältnis eher hinzunehmen, dass der Fremdlichtanteil etwas größer wird, als dass Nutzlicht verloren geht.

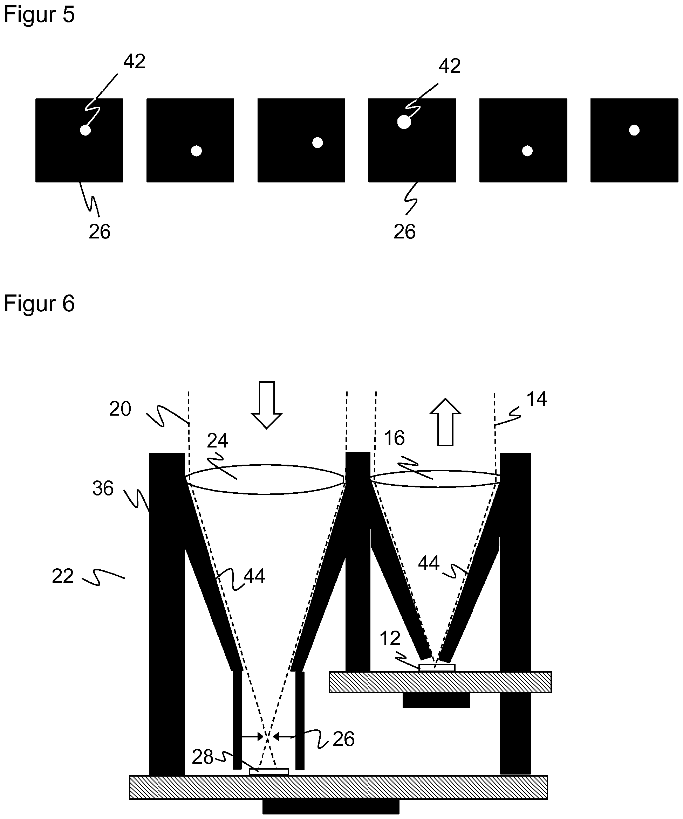

Figur 5 zeigt einige Beispiele einer aufgrund der gewonnenen Informationen über das Empfangslicht 20 individuell gefertigten Blende 26. Die laterale Verschiebung der jeweiligen Blendenöffnung 42 ist für realistische Toleranzen absichtlich übertrieben, um das Verfahren zu veranschaulichen. Jede der gezeigten Blenden 26 ist gerade für ein spezielles Exemplar eines Sensors 10 ausgemessen und gefertigt.

Die Herstellung der individuellen Blenden 26 erfolgt vorzugsweise direkt in der Fertigungslinie des Sensors 10. Dazu eignen sich ganz besonders additive Verfahren, die auch als 3D-Druck bezeichnet werden, wobei hier alle bekannten Technologien wie Pulverbett, Freiraum, Flüssigmaterial oder Schichtbau in Frage kommen. Der 3D-Druck erlaubt sogar, die Blende 26 direkt in dem Optikträger 36 an der richtigen Z-Position zu drucken. Ansonsten wird die Blende 26 außerhalb des Optikträgers 36 gedruckt und dann nur noch in Z-Richtung im Optikträger 36 positioniert. Für die Z-Positionierung kommen insbesondere Führungsschlitze oder Treppenstufen im Optikträger 36 und eine passende Außenkontur der Blende 26 in Betracht.

Alternativ sind aber auch subtraktive Verfahren denkbar. Dazu zählen Laserschneiden für Blech, Papier, Kunststoff, Zerteilen insbesondere durch Stanzen, Spanen mit geometrisch bestimmter Schneide wie Bohren, Fräsen, Abtragen beziehungsweise Erodieren, lithographische Verfahren oder Ätzverfahren.

Figur 6 zeigt ein Beispiel für ein fertiges Sende-Empfangsmodul des Sensors 10, wo die individuelle Blende 26 bereits in ihrer Zielposition eingebracht ist. Der hier beispielhaft verwendete gemeinsame Optikträger 36 umfasst auch jeweils einen Tubus 44 für den Sende- und Empfangspfad. Wenn der Sensor 10 wie in diesem Beispiel einen eigenen Lichtsender 12 aufweist, so werden vorzugsweise vor dem Herstellen der individuellen Blende 26 bereits Lichtsender 12, Sendeoptik 16 und Empfangsoptik 24 in dem Optikträger 36 angeordnet und fixiert. Das Empfangslicht 20, anhand dessen die erforderliche individuelle Blende 26 mittels der Kamers 34 ausgemessen wird, hat dann dieselben Eigenschaften wie später im Betrieb. Alternativ kann aber auch Empfangslicht 20 durch einen externen Lichtsender der Fertigungslinie erzeugt werden. Nachdem die individuelle Blende 26 hergestellt und an ihrer Z-Position angebracht ist, wird abschließend der Lichtempfänger 28 montiert.

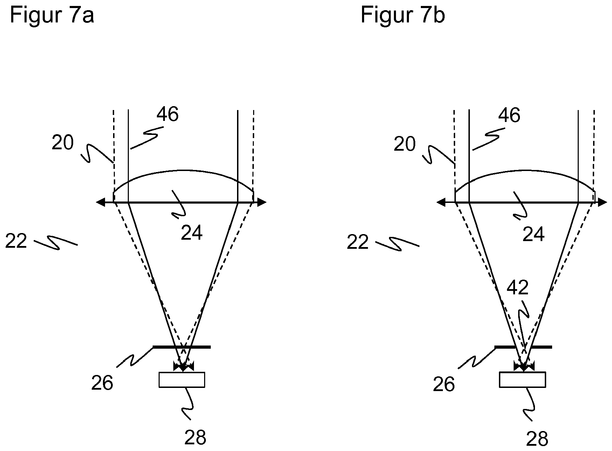

Figur 7 illustriert eine weitere Ausführungsform der Herstellung einer individuellen Blende 26. Hierbei wird nicht nur die Empfangsoptik 24, sondern auch die Blende 26 bereits vorab in dem Optikträger 36 fixiert. Zu diesem Zeitpunkt entsprechend der Figur 7a hat die Blende 26 jedoch noch keine funktionale Blendenöffnung 42, ist also nur ein noch geschlossener Blendenrohling. Die Z-Position für den Blendenrohling kann aus dem Optikdesign fest vorgegeben sein und unterliegt dann noch Toleranzen, die hingenommen werden. Alternativ ist aber auch denkbar, zunächst die Z-Position der konkreten Empfangsoptik 24 zu vermessen und den Blendenrohling dort zu positionieren.

Um nun die Blendenöffnung 42 anzubringen, wird die optische Abbildung der Empfangsoptik 24 genutzt, um den aufgeweiteten und kollimierten Laserstrahl 46 eines Materialbearbeitungslasers in Richtung der Blende 26 abzubilden. Die Empfangsoptik 24 verdichtet das Strahlenbündel des Lasers und erhöht damit die Laserleistungsdichte am Ort der Blende stark, und durch Ablation entsteht ein Loch oder die Blendenöffnung 42. Die Wellenlänge des Materialbearbeitungslasers λ_{Bearbeitung} ist so zu wählen, dass die Blende die gewünschte Öffnung bei der Arbeitswellenlänge des zu fertigenden Sensors λ_{Sensor} besitzt. Die Wellenlänge des Materialbearbeitungslasers ist nicht die einzige mögliche Stellschraube für die gewünschte Blendenöffnung 42. Ist beispielsweise λ_{Bearbeitung} >> λ_{Sensor}, wie im Falle eines CO2-Lasers mit 10600 nm, kann der Fokus durch gezielte De-Kollimation des aufgeweiteten Laserbündels an die richtige Fokusposition abgebildet werden, sei es durch Dejustage des Strahlaufweitungssystems oder eine zusätzliche Optik. Figur 7b zeigt die Empfangseinheit 22 mit bearbeiteter Blende 26.

Ein Materialbearbeitungslaser hat den großen Vorteil, dass dessen Laserstrahl 46 direkt durch die Empfangsoptik 24 geführt ist und daher automatisch deren Toleranzen berücksichtigt. Dennoch ist auch denkbar, die Blendenöffnung 42 mit einem anderen Verfahren individuell in einem Blendenrohling anzubringen, insbesondere mit einem der oben genannten subtraktiven Verfahren. Dazu wird die laterale Position der Blendenöffnung 42 vermessen, beispielsweise wie in Figur 4 mit Hilfe einer Kamera 34 und einer Mattscheibe 38, wobei der Blendenrohling selbst Eigenschaften aufweisen kann, welche die Funktion einer Projektionsfläche ähnlich der Mattscheibe 38 ermöglicht.

Über das bisher beschriebene hinaus erlaubt die individuelle Blende 26 auch, auf sonst für manche Sensoren 10 übliche Nahfeldzonen in der Empfangsoptik 24 zu verzichten und diese Funktion in der Blende 26 abzubilden. Linsen mit Nahfeldzone sind in der Regel werkzeuggebundene Teile, die nur wenig Variation in der Verwendung zulassen. Mit der Nahfeldzone in der Blende 26 können Standardlinsen verwendet werden, die kostengünstiger oder hochwertiger sind, und außerdem können Gerätevarianten zu einem sehr späten Fertigungsschritt generiert werden. Damit lässt die Stückzahl steigern, und auch dadurch werden Herstellkosten gesenkt.

## Patentansprüche

1. Verfahren zur Herstellung eines optoelektronischen Sensors (10), der eine Empfangseinheit (22) mit einer Empfangsoptik (24), einem Lichtempfänger (28) und einer Blende (26) dazwischen aufweist, wobei die Blende (26) in einer Fokalebene der Empfangsoptik (24) angeordnet wird, so dass ein von der Empfangsoptik erzeugtes Empfangslichtbündel (20) am Punkt kleinster Einschnürung durch die Blendenöffnung (42) der Blende (26) fällt,
**dadurch gekennzeichnet,**
**dass** die Blende (26) als individuelle Blende unter Verwendung der Empfangsoptik (24) spezifisch für gerade die Empfangsoptik (24) hergestellt wird, mit der gemeinsam sie in dem Sensor (10) eingesetzt wird.

2. Verfahren nach Anspruch 1,
wobei das Empfangslichtbündel (20) in der Montageposition der Empfangsoptik (24) vermessen wird, um eine Eigenschaft der herzustellenden individuellen Blende (26) zu gewinnen.

3. Verfahren nach Anspruch 2,
wobei als Eigenschaft die laterale Position des Empfangslichtbündels (20) vermessen wird, und wobei als individuelle Blende (26) eine Blende mit einer Blendenöffnung (42) an dieser Position hergestellt wird.

4. Verfahren nach Anspruch 2 oder 3,
wobei als Eigenschaft die Lage der Fokalebene vermessen wird, und wobei die Blende (26) in dieser Lage positioniert wird.

5. Verfahren nach einem der Ansprüche 2 bis 4,
wobei das Empfangslichtbündel (20) mit einer Kamera (34) vermessen wird.

6. Verfahren nach einem der Ansprüche 2 bis 5,
wobei zum Vermessen eine Projektionsfläche, insbesondere eine Mattscheibe (38), an einer möglichen Position der individuellen Blende (26) angeordnet wird.

7. Verfahren nach einem der vorhergehenden Ansprüche,
wobei die individuelle Blende (26) in einer Fertigungslinie des Sensors (10) hergestellt wird.

8. Verfahren nach einem der vorhergehenden Ansprüche,
wobei die individuelle Blende (26) mittels 3D-Druck hergestellt wird.

9. Verfahren nach einem der vorhergehenden Ansprüche,
wobei zunächst ein Blendenrohling ohne Blendenöffnung in der Fokalebene der Empfangsoptik (24) angeordnet und dann die Blendenöffnung (42) erzeugt wird.

10. Verfahren nach Anspruch 9,
wobei die Blendenöffnung (42) mit einem Materialbearbeitungslaser hergestellt wird, dessen Strahlengang (46) durch die Empfangsoptik (24) geführt wird.

11. Verfahren nach einem der vorhergehenden Ansprüche,
wobei Empfangsoptik (24) und individuelle Blende (26) in einem Optikträger (36) montiert werden.

12. Verfahren nach einem der vorhergehenden Ansprüche,
wobei der Lichtempfänger (28) mindestens ein Lawinenphotodiodenelement aufweist, das mit einer Vorspannung oberhalb einer Durchbruchspannung vorgespannt und somit in einem Geiger-Modus betrieben ist.

13. Verfahren nach einem der vorhergehenden Ansprüche,
wobei ein Lichtsender (12) in koaxialer oder biaxialer Anordnung zu dem Lichtempfänger (28) angeordnet wird, dessen Sendelichtstrahl (14) das Empfangslichtbündel (20) erzeugt.

14. Verfahren nach Anspruch 13,
wobei die Empfangsoptik (24) und eine Sendeoptik (16) des Lichtsenders in einem gemeinsamen Optikträger (36) angeordnet werden.

15. Verfahren nach einem der vorhergehenden Ansprüche,
wobei der Sensor (10) ein entfernungsmessender Sensor ist, insbesondere Laserscanner, in dem eine Lichtlaufzeitmesseinheit (30) zum Bestimmen einer Lichtlaufzeit an den Lichtempfänger (28) angeschlossen wird.

## Claims

1. A method for manufacturing an optoelectronic sensor (10) which has a receiving unit (22) with a receiving optics (24), a light receiver (28) and a diaphragm (26) between them, the diaphragm (26) being arranged in a focal plane of the receiving optics (24) so that a received light beam (20) generated by the receiving optics falls through the diaphragm aperture (42) of the diaphragm (26) at the point of smallest constriction,
**characterized in that** the diaphragm (26) is manufactured with use of the receiving optics (24) as an individual diaphragm specifically for the receiving optics (24) that is used in the sensor (10) together with the diaphragm.

2. The method according to claim 1,
wherein the receiving light beam (20) is measured in the mounting position of the receiving optics (24) to obtain a characteristic of the individual aperture (26) to be manufactured.

3. The method according to claim 2,
wherein the lateral position of the received light beam (20) is measured as the characteristic, and wherein a diaphragm having a diaphragm aperture (42) at this position is manufactured as an individual diaphragm (26).

4. The method according to claim 2 or 3,
wherein the position of the focal plane is measured as the characteristic, and
wherein the diaphragm (26) is positioned in this position.

5. The method according to one of claims 2 to 4,
wherein the received light beam (20) is measured with a camera (34).

6. The method according to one of claims 2 to 5,
wherein a projection surface, in particular a matt screen (38), is arranged at a possible position of the individual aperture (26) for measuring.

7. The method according to one of the preceding claims,
wherein the individual diaphragm (26) is manufactured in a production line of the sensor (10).

8. The method according to one of the preceding claims,
wherein the individual diaphragm (26) is manufactured by means of 3D printing.

9. The method according to one of the preceding claims,
wherein first a diaphragm blank without a diaphragm aperture is arranged in the focal plane of the receiving optics (24) and then the diaphragm aperture (42) is generated.

10. The method according to claim 9,
wherein the diaphragm aperture (42) is manufactured with a material processing laser, the beam path (46) of which is guided through the receiving optics (24).

11. The method according to one of the preceding claims,
wherein receiving optics (24) and individual diaphragm (26) are mounted in an optics carrier (36).

12. The method according to one of the preceding claims,
wherein the light receiver (28) has at least one avalanche photodiode element which is biased with a bias voltage above a breakdown voltage and is thus operated in a Geiger mode.

13. The method according to one of the preceding claims,
wherein a light transmitter (12) is arranged in a coaxial or biaxial arrangement with respect to the light receiver (28), the transmission light beam (14) of which generates the received light beam (20).

14. The method according to claim 13,
wherein the receiving optics (24) and a transmission optics (16) of the light transmitter are arranged in a common optics carrier (36).

15. The method according to one of the preceding claims,
wherein the sensor (10) is a distance-measuring sensor, in particular a laser scanner, wherein a light time of flight measuring unit (30) for determining a light time of flight is connected to the light receiver (28).

## Revendications

1. Procédé de fabrication d'un capteur optoélectronique (10) qui présente une unité de réception (22) avec une optique de réception (24), un récepteur de lumière (28) et une membrane (26) entre eux, la membrane (26) étant disposée dans un plan focal de l'optique de réception (24) de sorte qu'un faisceau lumineux reçu (20) généré par les optiques de réception tombe par le diaphragme (42) de l'ouverture de membrane (26) au point le plus étroit,
**caractérisé en ce que** la membrane (26) est fabriquée en utilisant l'optique de réception (24) en tant que diaphragme individuel spécifiquement pour l'optique de réception (24) qui est utilisée dans le capteur (10) avec la membrane.

2. Procédé selon la revendication 1,
dans lequel le faisceau lumineux de réception (20) est mesuré dans la position de montage de l'optique de réception (24) pour obtenir une caractéristique de l'ouverture individuelle (26) à fabriquer.

3. Procédé selon la revendication 2,
dans lequel la position latérale du faisceau lumineux reçu (20) est mesurée en tant que caractéristique, et dans lequel un diaphragme ayant une ouverture de diaphragme (42) à cette position est fabriqué en tant que diaphragme individuel (26).

4. Procédé selon la revendication 2 ou 3,
dans lequel la position du plan focal est mesurée en tant que caractéristique, et dans lequel le diaphragme (26) est positionné dans cette position.

5. Procédé selon l'une des revendications 2 à 4,
dans lequel le faisceau lumineux reçu (20) est mesuré avec une caméra (34).

6. Procédé selon l'une des revendications 2 à 5,
dans lequel pour la mesure une surface de projection, en particulier un écran mat (38), est disposée à une position possible de l'ouverture individuelle (26).

7. Procédé selon l'une des revendications précédentes,
dans lequel la membrane individuelle (26) est fabriquée dans une ligne de production du capteur (10).

8. Procédé selon l'une des revendications précédentes,
dans lequel le diaphragme individuel (26) est fabriqué au moyen d'une impression 3D.

9. Procédé selon l'une des revendications précédentes,
dans lequel d'abord une ébauche de diaphragme sans ouverture de diaphragme est disposée dans le plan focal de l'optique de réception (24) et ensuite l'ouverture de diaphragme (42) est générée.

10. Procédé selon la revendication 9,
dans lequel l'ouverture de diaphragme (42) est fabriquée avec un laser de traitement de matériau, dont le trajet de faisceau (46) est guidé à travers l'optique de réception (24).

11. Procédé selon l'une des revendications précédentes,
dans lequel une optique de réception (24) et un diaphragme individuel (26) sont montés dans un support optique (36).

12. Procédé selon l'une des revendications précédentes,
dans lequel le récepteur de lumière (28) présente au moins un élément de photodiode à avalanche qui est polarisé avec une tension de polarisation au-dessus d'une tension de claquage et qui fonctionne ainsi en mode Geiger.

13. Procédé selon l'une des revendications précédentes,
dans lequel un émetteur de lumière (12) est disposé selon un agencement coaxial ou biaxial par rapport au récepteur de lumière (28), dont le faisceau lumineux de transmission (14) génère le faisceau lumineux reçu (20).

14. Procédé selon la revendication 13,
dans lequel l'optique de réception (24) et une optique de transmission (16) de l'émetteur de lumière sont disposées dans un support optique commun (36).

15. Procédé selon l'une des revendications précédentes,
dans lequel le capteur (10) est un capteur de mesure de distance, en particulier un scanner laser, une unité de mesure de temps de vol de lumière (30) pour déterminer un temps de vol de lumière étant reliée au récepteur de lumière (28).
